# FASCICULE DE BREVET EUROPEEN

(11) **EP 3 686 085 B1**
(45) Date de publication et mention de la délivrance du brevet: **11.01.2023**
(21) Numéro de dépôt: 20151733.1
(22) Date de dépôt: 14.01.2020
(51) Int. Cl.: B62D 21/11

(54) **VÉHICULE AUTOMOBILE COMPRENANT UN ORGANE DE RENFORT ENTRE UN BERCEAU ET UNE CHAPE DE ROUE**
KRAFTFAHRZEUG, DAS EIN VERSTÄRKUNGSORGAN ZWISCHEN DEM ACHSRAHMEN UND DEM RADKASTEN ENTHÄLT
MOTOR VEHICLE COMPRISING A REINFORCEMENT ELEMENT BETWEEN A CRADLE AND A WHEEL YOKE

(30) Priorité: 22.01.2019 FR 1900531
(43) Date de publication de la demande: 29.07.2020
(73) Titulaire: Renault s.a.s, 92100 Boulogne Billancourt (FR)
(72) Inventeur: BELIN, CYRIL, 72210 ROEZE SUR SARTHE (FR); BIEN, CEDRIC, 72380 SAINTE JAMME SUR SARTHE (FR)
(74) Mandataire: Renault Group

(56) Documents cités:
- CN-U- 207 029 301
- DE-A1-102012 007 325
- KR-A- 20180 104 797
- US-B1- 6 742 808

## Description

### Domaine technique

La présente invention concerne le domaine des véhicules automobiles, et plus particulièrement, la transmission des efforts entre la roue et la caisse du véhicule automobile.

Plus précisément, l'invention concerne les véhicules automobiles comprenant un berceau formé par deux demi-coquilles, solidaire de la caisse du véhicule et sur lequel vient se monter des chapes de fixation des biellettes de roue.

Par « berceau », on entend le cadre métallique, fixé au châssis ou à la caisse et destiné à recevoir un ou plusieurs éléments métalliques, tels que par exemple les éléments de suspension, les chapes de roues, etc....

Par « caisse », on entend le squelette de la voiture, qui peut prendre la forme soit d'une caisse autoporteuse, c'est-à-dire une structure complète comportant l'ensemble des éléments de tôlerie assemblés et soudés, soit d'un châssis, c'est-à-dire l'assemblage de longerons et de traverses sur lequel les éléments mécaniques et la carrosserie viennent se fixer.

### Techniques antérieures

Afin de reprendre les efforts entre la roue et la caisse du véhicule automobile, il est connu de prévoir des renforts à l'intérieur des demi-coquilles du berceau ou d'augmenter l'épaisseur de certaines pièces, telles que notamment les chapes de roues.

Le document KR-A-2018 0104797 divulgue un train arrière ayant les caractéristiques du préambule de la revendication 1.

Toutefois, de telles solutions ne sont pas satisfaisantes.

### Exposé de l'invention

L'objectif de l'invention est donc de pallier ces inconvénients et d'améliorer la reprise des efforts entre la roue et la caisse du véhicule automobile, et ce sans augmenter l'épaisseur des pièces mécaniques.

La présente invention a pour objet un train arrière de véhicule automobile comprenant une caisse, un berceau arrière relié à ladite caisse par des organes de fixation et des chapes de roues sur lesquelles viennent se fixer des biellettes de roues.

Le train arrière comprend un organe de renfort ou gousset fixé respectivement entre une chape de roue et un organe de fixation correspondant.

En d'autres termes, le train arrière comprend un organe de renfort fixé entre le point de fixation du berceau à la caisse du véhicule et une chape de roue correspondante

Ainsi, chaque organe de renfort est ainsi directement relié à un point d'accroché à la caisse, c'est-à-dire à un organe de fixation qui correspond au point le plus raide de la fixation du berceau sur la caisse du véhicule. Il n'est donc plus nécessaire d'augmenter l'épaisseur de la chape, ni d'insérer des renforts internes dans chacune des demie-coquilles, ce qui facilite le procédé de fabrication.

Avantageusement, les organes de renforts sont fixés à l'organe de fixation correspondant à proximité de l'extrémité dudit organe de fixation fixée à la caisse du véhicule, afin de reprendre le maximum d'effort.

De manière générale, les organes de renfort comprennent une première partie épousant la forme d'une partie de fixation de la chape de roue correspondant et une deuxième partie épousant la forme de l'organe de fixation correspondant.

La première partie présente, par exemple, une forme en U et la deuxième partie présente, par exemple, une forme en U.

Les organes de renfort peuvent être réalisés en matériau métallique, tel que par exemple de l'acier.

Les organes de renfort peuvent présenter la forme d'une plaque fine.

Par exemple, les organes de renfort sont fixés respectivement à la chape de roue correspondante et à l'organe de fixation correspondant par soudage. En variante, on pourrait envisager d'autres moyens fixation.

Selon un mode de réalisation, le train arrière comprend une chape de roue gauche supérieure, une chape de roue gauche inférieure, une chape de roue droite supérieure et une chape de roue droite inférieure.

Avantageusement, le train arrière comprend un organe de renfort gauche supérieur fixé respectivement à la chape gauche supérieure et à un organe de fixation gauche supérieur, un organe de renfort droite supérieur fixé respectivement à la chape droite supérieure et à un organe de fixation droite supérieur, un organe de renfort gauche inférieur fixé respectivement à la chape gauche inférieure et à un organe de fixation gauche inférieur et un organe de renfort droite inférieur est fixé respectivement à la chape droite inférieure et à un organe de fixation droite inférieur.

Selon un second aspect, l'invention concerne un véhicule automobile comprenant un train arrière tel que décrit précédemment.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :

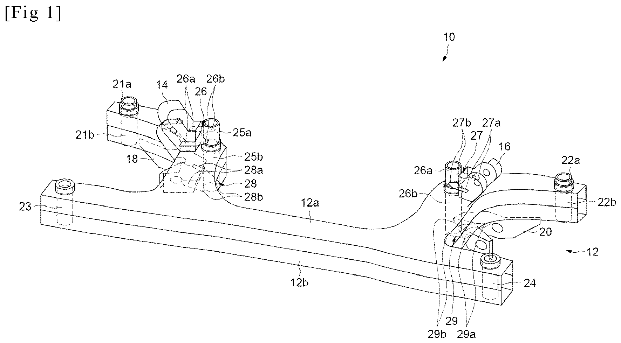

[Fig 1] est une vue schématique en perspective d'une partie de train arrière d'un véhicule automobile selon un mode de réalisation de l'invention ; et
[Fig 2]
[Fig 3]
[Fig 4]
   illustrent en perspective des exemples d'organes de renforts selon différents modes de réalisation de l'invention.

La figure 1 représente une partie d'un train arrière 10 d'un véhicule automobile.

La partie de train arrière 10 comprend une caisse (non représentée), non démontable, un berceau arrière 12 relié à la caisse et des chapes de roues 14, 16, 18, 20 sur lesquelles viennent se fixer des biellettes (non représentées) qui maintiennent les roues (non représentées) du véhicule automobile.

Tel qu'illustré sur la figure 1, le berceau arrière 12 comprend une demie-coquille supérieure 12a et une demie-coquille inférieure 12b assemblées ensemble pour former une pièce métallique creuse. Chacune des demie-coquilles 12a, 12b est réalisée à partir d'une tôle métallique emboutie. Le berceau 12 présente une forme symétrique par rapport à l'axe longitudinal du véhicule.

Le berceau 12 est fixé à la caisse du véhicule par l'intermédiaire d'une pluralité d'organes fixation d'extrémité 21a, 21b, 22a, 22b, 23, 24, et d'organes de fixation centraux 25a, 25b, 26a et 26b.

Lesdits organes de fixation présentent la forme d'une pièce cylindrique solidaire du berceau 12, par exemple par soudage, et fixée sur la caisse par des moyens de visseries (non représentés).

Les organes de fixation centraux 25a, 25b, 26a et 26b comprennent deux organes de fixation gauche 25a, 25b, situés à gauche sur la figure 1 et deux organes de fixation droite 26a, 26b, situés à droite sur la figure 1.

Les organes de fixation gauche 25a, 25b comprennent un organe de fixation gauche supérieur 25a solidaire du berceau par exemple par soudage et un organe de fixation gauche inférieur 25b de diamètre inférieur au diamètre de l'organe de fixation gauche supérieur 25a et configuré pour venir s'emboiter dans ledit organe de fixation gauche supérieur 25a.

De manière similaire, les organes de fixation droite 26a, 26b comprennent un organe de fixation droite supérieur 26a solidaire du berceau 12 par exemple par soudage et un organe de fixation droite inférieur 26b de diamètre inférieur au diamètre de l'organe de fixation droite supérieur 26a et configuré pour venir s'emboiter dans ledit organe de fixation droite supérieur 26a.

Tel qu'illustré sur la figure 1, le véhicule automobile comprend en outre des organes de renforts 26, 27, 28, 29 fixé respectivement entre une chape de roue 14, 16, 18, 20 et un organe de fixation gauche ou droite 25a, 25b, 26a, 26b correspondant.

Un organe de renfort gauche supérieur 26 est fixé respectivement à la chape gauche supérieure 14 et à l'organe de fixation gauche supérieur 25a.

Un organe de renfort droite supérieur 27 est fixé respectivement à la chape droite supérieure 16 et à l'organe de fixation droite supérieur 26a.

Un organe de renfort gauche inférieur 28 est fixé respectivement à la chape gauche inférieure 18 et à l'organe de fixation gauche inférieur 25b.

Un organe de renfort droite inférieur 29 est fixé respectivement à la chape droite inférieure 20 et à l'organe de fixation droite inférieur 26b.

Chaque organe de renfort 26, 27, 28, 29 est ainsi directement relié à un point d'accroché à la caisse, c'est-à-dire à un organe de fixation 25a, 25b, 26a, 26b, qui correspond au point le plus raide de la fixation du berceau 12 sur la caisse du véhicule.

Ainsi, il n'est plus nécessaire d'augmenter l'épaisseur de la chape. Il n'est plus non plus nécessaire d'insérer des renforts internes dans chacune des demie-coquilles, ce qui facilite le procédé de fabrication.

Les organes de renforts 26, 27, 28, 29 sont fixés à l'organe de fixation correspondant 25a, 25b, 26a, 26b à proximité de l'extrémité dudit organe de fixation fixée à la caisse du véhicule, afin de reprendre le maximum d'effort.

Les organes de renforts 26, 27, 28, 29 sont réalisées en matériau métallique, tel que par exemple de l'acier.

Les organes de renforts 26, 27, 28, 29 se présentent sous la forme d'une plaque métallique fine et peuvent avoir n'importe quelle forme.

La figure 1 illustre un premier exemple de forme de chacun des organes de renfort. Tel qu'illustré sur cette figure, chacun des organes de renfort 26, 27, 28, 29 comprend une première partie en U 26a, 27a, 28a, 29a fixée sur la chape de roue correspondante et une deuxième partie en U 26b, 27b, 28b, 29b fixée sur l'organe de fixation correspondant.

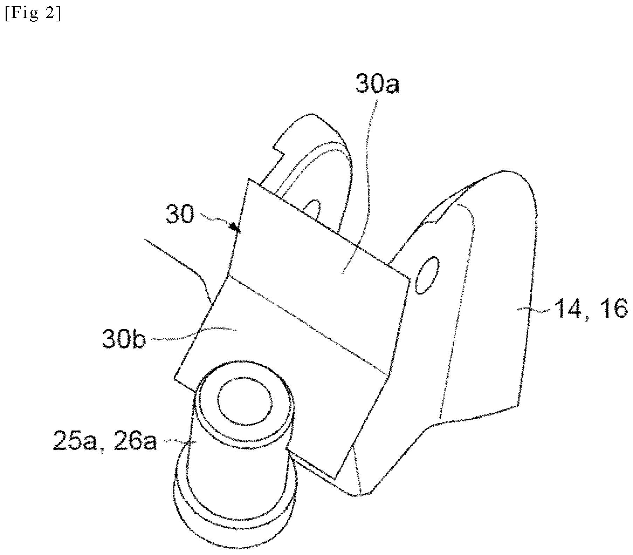

La figure 2 illustre un deuxième exemple de forme de chacun des organes de renfort. L'organe de renfort 30 présente une forme parallélépipédique comprenant une première partie 30a fixée sur la chape de roue correspondante et deuxième partie 30b en concordance de forme avec l'organe de fixation correspondant.

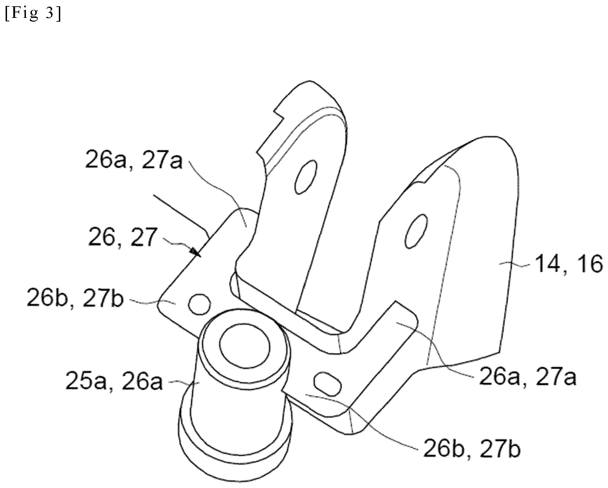

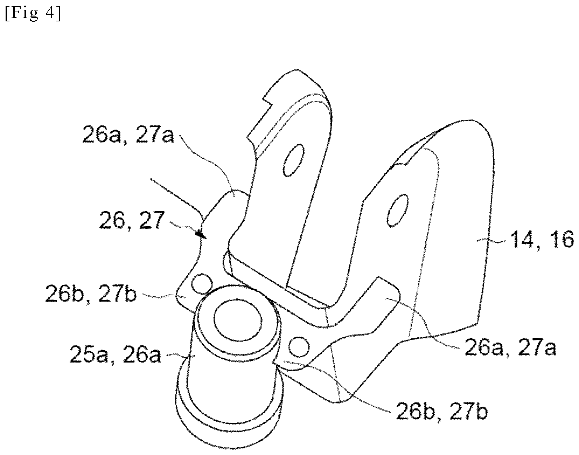

Les figures 3 et 4] illustre d'autres exemple de forme pour les organes de renfort 26, 27.

De manière générale, les organes de renfort 26, 27 comprennent une première partie 26a, 27a venant épouser la forme de la partie de fixation de la chape de roue 14, 16 pour sa fixation sur ladite chape par exemple par soudage, et une deuxième partie 26b, 27b venant épouser la forme de l'organe de fixation 25a, 26a pour sa fixation sur ledit organe de fixation, par exemple par soudage.

La forme des organes de renfort 26, 27, 28, 29 de la figure 1 peut être choisie parmi les formes décrites en référence aux figures 1 à 4 et peuvent être de forme identique ou différente. L'invention est définie dans les revendications.

Ainsi, grâce à l'invention, la reprise des efforts entre la roue et la caisse est satisfaisante et il n'est plus nécessaire d'augmenter l'épaisseur de la chape, ni d'insérer des renforts internes dans chacune des demie-coquilles, ce qui facilite le procédé de fabrication.

## Revendications

1. Train arrière (10) de véhicule automobile comprenant une caisse, un berceau arrière (12) relié à ladite caisse par des organes de fixation (25a, 25b, 26a et 26b) et des chapes de roues (14, 16, 18, 20) sur lesquelles viennent se fixer des biellettes de roues, **caractérisé en ce qu'**il comprend un organe de renfort (26, 27, 28, 29, 30) fixé respectivement directement entre une chape de roue (14, 16, 18, 20) et un organe de fixation (25a, 25b, 26a, 26b) correspondant, les organes de renfort (26, 27, 28, 29, 30) comprenant une première partie (26a, 27a, 28a, 29a, 30a) épousant la forme d'une partie de fixation de la chape de roue correspondant (14, 16, 18, 20) et une deuxième partie (26b, 27b, 28b, 29b, 30b) épousant la forme de l'organe de fixation correspondant (25a, 25b, 26a, 26b), la première partie (26a, 27a, 28a, 29a, 30a) présentant une forme en U et la deuxième partie (26b, 27b, 28b, 29b, 30b) présentant une forme en U..

2. Train arrière selon la revendication 1, dans lequel les organes de renforts (26, 27, 28, 29, 30) sont fixés à l'organe de fixation correspondant (25a, 25b, 26a, 26b) à proximité de l'extrémité dudit organe de fixation fixée à la caisse du véhicule.

3. Train arrière selon l'une quelconque des revendications précédentes, dans lequel les organes de renfort (26, 27, 28, 29, 30) sont réalisés en matériau métallique.

4. Train arrière selon l'une quelconque des revendications précédentes, dans lequel les organes de renfort (26, 27, 28, 29, 30) présentent la forme d'une plaque fine.

5. Train arrière selon l'une quelconque des revendications précédentes, dans lequel les organes de renfort (26, 27, 28, 29, 30) sont fixés respectivement à la chape de roue correspondante (14, 16, 18, 20) et à l'organe de fixation (25a, 25b, 26a, 26b) correspondant par soudage.

6. Train arrière selon l'une quelconque des revendications précédentes, comprenant une chape de roue gauche supérieure (14), une chape de roue gauche inférieure (18), une chape de roue droite supérieure (16) et une chape de roue droite inférieure (20).

7. Train arrière selon la revendication 6, comprenant un organe de renfort gauche supérieur (26) fixé respectivement à la chape gauche supérieure (14) et à un organe de fixation gauche supérieur (25a), un organe de renfort droite supérieur (27) fixé respectivement à la chape droite supérieure (16) et à un organe de fixation droite supérieur (26a), un organe de renfort gauche inférieur (28) fixé respectivement à la chape gauche inférieure (18) et à un organe de fixation gauche inférieur (25b) et un organe de renfort droite inférieur (29) est fixé respectivement à la chape droite inférieure (20) et à un organe de fixation droite inférieur (26a).

8. Véhicule automobile comprenant un train arrière (10) selon l'une quelconque des revendications précédentes.

## Patentansprüche

1. Hinterachsaggregat (10) eines Kraftfahrzeugs, das eine Karosserie, einen hinteren Hilfsrahmen (12), der mit der Karosserie durch Befestigungsorgane (25a, 25b, 26a und 26b) verbunden ist, und Radhalterungen (14, 16, 18, 20), an welchen Radstangen befestigt werden, umfasst, **dadurch gekennzeichnet, dass** es ein Verstärkungsorgan (26, 27, 28, 29, 30) umfasst, das jeweils direkt zwischen einer Radhalterung (14, 16, 18, 20) und einem entsprechenden Befestigungsorgan (25a, 25b, 26a, 26b) befestigt ist, wobei die Verstärkungsorgane (26, 27, 28, 29, 30) einen ersten Teil (26a, 27a, 28a, 29a, 30a), der an die Form eines Befestigungsteils der entsprechenden Radhalterung (14, 16, 18, 20) angepasst ist, und einen zweiten Teil (26b, 27b, 28b, 29b, 30b), der an die Form des entsprechenden Befestigungsorgans (25a, 25b, 26a, 26b) angepasst ist, umfassen, wobei der erste Teil (26a, 27a, 28a, 29a, 30a) eine U-Form aufweist und der zweite Teil (26b, 27b, 28b, 29b, 30b) eine U-Form aufweist.

2. Hinterachsaggregat nach Anspruch 1, wobei die Verstärkungsorgane (26, 27, 28, 29, 30) an dem entsprechenden Befestigungsorgan (25a, 25b, 26a, 26b) in der Nähe des Endes des Befestigungsorgans befestigt sind, das an der Karosserie des Fahrzeugs befestigt ist.

3. Hinterachsaggregat nach einem der vorhergehenden Ansprüche, wobei die Verstärkungsorgane (26, 27, 28, 29, 30) aus einem metallischen Material hergestellt sind.

4. Hinterachsaggregat nach einem der vorhergehenden Ansprüche, wobei die Verstärkungsorgane (26, 27, 28, 29, 30) die Form einer dünnen Platte aufweisen.

5. Hinterachsaggregat nach einem der vorhergehenden Ansprüche, wobei die Verstärkungsorgane (26, 27, 28, 29, 30) an der entsprechenden Radhalterung (14, 16, 18, 20) bzw. am entsprechenden Befestigungsorgan (25a, 25b, 26a, 26b) durch Schweißen befestigt sind.

6. Hinterachsaggregat nach einem der vorhergehenden Ansprüche, welches eine obere linke Radhalterung (14), eine untere linke Radhalterung (18), eine obere rechte Radhalterung (16) und eine untere rechte Radhalterung (20) umfasst.

7. Hinterachsaggregat nach Anspruch 6, welches ein oberes linkes Verstärkungsorgan (26), das an der oberen linken Radhalterung (14) bzw. an einem oberen linken Befestigungsorgan (25a) befestigt ist, ein oberes rechtes Verstärkungsorgan (27), das an der oberen rechten Radhalterung (16) bzw. an einem oberen rechten Befestigungsorgan (26a) befestigt ist, ein unteres linkes Verstärkungsorgan (28), das an der unteren linken Radhalterung (18) bzw. an einem unteren linken Befestigungsorgan (25b) befestigt ist, und ein unteres rechtes Verstärkungsorgan (29), das an der unteren rechten Radhalterung (20) bzw. an einem unteren rechten Befestigungsorgan (26a) befestigt ist, umfasst.

8. Kraftfahrzeug, welches ein Hinterachsaggregat (10) nach einem der vorhergehenden Ansprüche umfasst.

## Claims

1. Motor vehicle rear axle assembly (10) comprising a body, a rear cradle (12) connected to said body by fastening members (25a, 25b, 26a and 26b) and wheel clevises (14, 16, 18, 20) to which wheel connecting rods are fastened, **characterized in that** it comprises a reinforcing member (26, 27, 28, 29, 30) fastened respectively directly between a wheel clevis (14, 16, 18, 20) and a corresponding fastening member (25a, 25b, 26a, 26b), the reinforcing members (26, 27, 28, 29, 30) comprising a first part (26a, 27a, 28a, 29a, 30a) matching the shape of a fastening part of the corresponding wheel clevis (14, 16, 18, 20) and a second part (26b, 27b, 28b, 29b, 30b) matching the shape of the corresponding fastening member (25a, 25b, 26a, 26b), the first part (26a, 27a, 28a, 29a, 30a) having a U shape and the second part (26b, 27b, 28b, 29b, 30b) having a U shape.

2. Rear axle assembly according to Claim 1, wherein the reinforcing members (26, 27, 28, 29, 30) are fastened to the corresponding fastening member (25a, 25b, 26a, 26b) near the end of said fastening member that is fastened to the body of the vehicle.

3. Rear axle assembly according to either one of the preceding claims, wherein the reinforcing members (26, 27, 28, 29, 30) are made of metallic material.

4. Rear axle assembly according to any one of the preceding claims, wherein the reinforcing members (26, 27, 28, 29, 30) have the shape of a thin plate.

5. Rear axle assembly according to any one of the preceding claims, wherein the reinforcing members (26, 27, 28, 29, 30) are fastened respectively to the corresponding wheel clevis (14, 16, 18, 20) and to the corresponding fastening member (25a, 25b, 26a, 26b) by welding.

6. Rear axle assembly according to any one of the preceding claims, comprising an upper left wheel clevis (14), a lower left wheel clevis (18), an upper right wheel clevis (16) and a lower right wheel clevis (20).

7. Rear axle assembly according to Claim 6, comprising an upper left reinforcing member (26) fastened respectively to the upper left clevis (14) and to an upper left fastening member (25a), an upper right reinforcing member (27) fastened respectively to the upper right clevis (16) and to an upper right fastening member (26a), a lower left reinforcing member (28) fastened respectively to the lower left clevis (18) and to a lower left fastening member (25b) and a lower right fastening member (29) fastened respectively to the lower right clevis (20) and to a lower right fastening member (26a) .

8. Motor vehicle comprising a rear axle assembly (10) according to any one of the preceding claims.
